# EUROPEAN PATENT APPLICATION

(11) **EP 3 171 020 A1**
(43) Date of publication of application: **24.05.2017**
(21) Application number: 15382569.0
(22) Date of filing: 17.11.2015
(51) Int. Cl.: F03B 13/14

(54) **ELECTRIC-HYDRAULIC HYBRID POWER TAKE-OFF WITH APPLICATION TO RENEWABLE ENERGY CONVERSION**

(71) Applicant: Oceantec Energias Marinas, SL, 48160 Derio - Bizkaia (ES)
(72) Inventor: OJANGUREN, Martín, 48160 Derio - Bizkaia (ES); TOUZÓN, Imanol, 48160 Derio - Bizkaia (ES); DE MIGUEL, Borja, 48160 Derio - Bizkaia (ES); RICO, Antonio, 48160 Derio - Bizkaia (ES); ALDAITURRIAGA, Endika, 48160 Derio - Bizkaia (ES); RUIZ- MINGUELA, José Pablo, 48160 Derio - Bizkaia (ES)
(74) Representative: Balder IP Law, S.L.

(57) **Abstract**

The invention relates to a power take-off system (30,70,80) for mechanical to electrical energy conversion, which comprises a rotary shaft (31) connectable to a prime mover (60), an electric generator (32) connected to the rotary shaft (31) and a hydraulic system (40) comprising a variable-displacement hydraulic pump (41).

The variable-displacement hydraulic pump (41) is connected to the rotary shaft (31) in parallel with the electric generator (32). The power take-off system further comprises control means (50) configured to instruct the electric generator (32) and the variable-displacement hydraulic pump (41) to convert mechanical energy from the rotary shaft (31) into electrical and hydraulic energy, respectively, upon energization of the rotary shaft (31) by the prime mover (60), or to instruct one of the electric generator (32) and the variable-displacement hydraulic pump (41) to convert mechanical energy from the rotary shaft (31) into electrical or hydraulic energy, respectively, and the other one of the electric generator (32) and the variable-displacement hydraulic pump (41) to introduce mechanical energy to the rotary shaft (31).

The invention also relates to a wave energy converter comprising such a power take-off system, and a method of operating it.

## Description

### TECHNICAL FIELD

The present invention is related to the field of power take-offs, and more particularly, hydraulic hybrid power take-offs for conversion of energy from renewable energy sources with fluctuating intensity into electrical energy.

### STATE OF THE ART

The use of renewable energy sources has been growing in the last decades, which has led to many improvements in the corresponding energy converters. In this sense, the target of some improvements is to increase the efficiency in the energy conversion so that the amount of electric power extracted is maximised.

Energy converters must be adapted to the characteristics of the particular renewable energy source they convert energy from. For example, some energy sources feature rapid fluctuations in intensity and/or intermittence. Such behaviour cannot affect the performance of the energy converter which shall output a level of electric power without rapid variations. Supplying power to the electrical grid may be troublesome when the level of power is not stable, namely the wattage changes substantially in short periods of time. For this reason, energy converters shall include mechanisms for providing a stable output power, even though these mechanisms should keep to a minimum the losses in conversion efficiency.

Wind power, for example, is a renewable energy source characterized by a large variability due to wind gusts that, in principle, could affect the stability of the electric power extracted from a wind turbine. Wind farms are usually placed in windy locations so that a large amount of energy may be transformed into electric power. These locations, precisely, experience powerful wind gusts that may change the speed of the wind from about 0km/h to over 50km/h, or 100km/h, or even 150km/h, in just a few seconds.

Another example is wave power. One of the main issues in wave energy conversion is that waves feature variable characteristics in terms of period, height and/or other parameters resulting in, sometimes significant, fluctuations in the intensity of the wave power.

In a given sea state, a wave energy converter must cope with incident waves whose energy may feature large peak-to-average ratios, for instance, peak-to-average ratios greater than 5, and sometimes even greater than 10. In the case of a power take-off system for wave energy conversion, the system may need to be oversized, particularly the electric generator and subsequent electric conditioning and transportation systems (power electronics, transformers, cables, protection mechanisms, among others) so as to support large differences between the peaks and the average of the wave energy. This, in turn, makes the system more expensive and less efficient since the system will be operating well below its capacity during the time intervals in which the incoming wave energy is close to or below the average: the larger the peak-to-average ratio is, the less efficient the power take-off system will be.

The peak-to-average ratio not only affects the size and survivability of the power take-off system, but it also affects the converted electrical energy which will fluctuate, thus the output electric power will not be stable. In this regard, attempts to deliver a more stable and constant output power have been proposed in prior art energy converters with the addition of hydraulic systems.

U.S. Patent Application Publication No. 2012/0117958 A1 relates to a device for extracting and storing energy from a fluctuating energy flow and a method of operating the same. A rotating shaft driven by a renewable energy source drives a hydraulic pump; the hydraulic pump is connected to a hydraulic motor by means of high and low pressure manifolds in which a fluid is displaced. The fluid is displaced as the pressure in the manifolds tends towards an optimum and, owing to said displacement of the fluid, the hydraulic motor acts on a generator shaft that has a generator connected to it.

U.S. Patent No. 6748737 B2 discloses a regenerative energy storage and conversion system that can be used by the wind energy industry for decoupling the variable wind conditions from the electric power demand. A wind turbine feeds energy to a power circuit that includes a pump and motor assembly. Hydraulic oil in the power circuit is drawn into the pump and motor assembly and acts on an electric generator. The excess of hydraulic oil is stored in accumulators and, when there is no wind, the oil actuates on a system including a flywheel and a hydraulic motor. Said hydraulic motor is interconnected with the electric generator so as to convert the accumulated energy into electrical energy.

Besides, hybrid systems including hydraulic accumulators have been proposed in other technical fields as well. Chinese Patent Application Publication No. 103215982 A discloses construction machinery with a rotation driving system. A platform connected to a rotary motor features mechanical energy while it is moving, and said energy is dissipated when the platform brakes. This otherwise dissipated mechanical energy is converted up to three times before it is stored in the form of hydraulic energy: from mechanical to electrical, from electrical to mechanical again, and from mechanical to hydraulic. The accumulated hydraulic energy may be converted into electrical or mechanical energy at some other time using the energy converters included in the machinery.

These energy converters or systems of the prior art may provide a more stable output power thanks to the energy that is stored in accumulators but, in exchange, their efficiency is significantly affected.

Performing a mechanical to hydraulic energy conversion first, and a hydraulic to electrical energy conversion afterwards decreases the efficiency due to inherent conversion losses. Obviously, these losses add up as more conversion stages are included in the system.

Therefore, there is a need for a power take-off system that achieves an improved efficiency by reducing the number of energy conversions and, thus, the amount of dissipated energy, and that may adjust for the fluctuations in intensity of a renewable energy source with large peak-to-average ratios.

### DESCRIPTION OF THE INVENTION

The invention relates to a power take-off system for mechanical to electrical energy conversion comprising a rotary shaft, the rotary shaft providing mechanical energy upon energization, the power take-off system comprising an electric generator connected to the rotary shaft; and a hydraulic system comprising a variable-displacement hydraulic pump that can act as well as a hydraulic motor.

According to a first aspect of the present invention, the variable-displacement hydraulic pump is connected to the rotary shaft, which is connectable to a prime mover. The power take-off system further comprises control means configured to instruct the electric generator and the variable-displacement hydraulic pump to convert mechanical energy from the rotary shaft upon its energization by the prime mover into electrical and hydraulic energy, respectively, or to instruct one of the electric generator and the variable-displacement hydraulic pump to convert mechanical energy from the rotary shaft into electrical or hydraulic energy, respectively, and the other one of the electric generator and the variable-displacement hydraulic pump to introduce mechanical energy to the rotary shaft.

That is, according to the invention, a converter or prime mover turns incoming energy of a renewable energy source into a torque that is applied to the rotary shaft of the power take-off system. The fluctuations in the intensity of the incoming energy may result in large peak-to-average ratios that the power take-off system has to cope with. In such case, the torque applied to the rotary shaft will have a variable intensity.

The control means may vary the displacement of the hydraulic pump -a pump that may work as a hydraulic motor as well- when the hydraulic pump is working as a pump so that a predefined or dynamically specified level of torque may be converted directly by the electric generator into electrical energy. Thus with a direct conversion into electrical energy, losses in the energy conversions may be minimized. Any torque in excess of the predefined level of torque may be extracted by the hydraulic pump and stored in the hydraulic system in the form of hydraulic energy.

The hydraulic system may monitor the level of torque on the rotary shaft so that the control means may adjust the displacement of the hydraulic pump based on the torque level. Therefore, the control means may adjust the displacement of the hydraulic pump continuously so that the torque on the rotary shaft is in accordance with the level of pressure in the accumulators of the hydraulic system.

By correctly adjusting the displacement of the hydraulic pump, an appropriate relation between rotational speed of the shaft, pressure in the accumulators, and level of torque supplied to or extracted from the rotary shaft is achieved. When the pressure in the hydraulic system is low, it will be necessary to adjust the displacement of the pump more significantly in order to reach a higher level of torque, whereas, with higher pressures, smaller variations in the displacement may be enough to reach the same torque, both when working in the pump and motor modes of operation. In this sense, the hydraulic pump of the power take-off system features variable displacement that is advantageous with respect to linear hydraulic cylinders in which displacement may not be adjusted.

The predefined level of torque may be inputted in the control means so as to configure appropriate working conditions of the electric generator based on variables such as: capacity of the generator; peak-to-average ratio of the energy of the waves or wind, for example; predefined levels of electric power extracted from the power take-off system, among others.

Since the torque in excess of the predefined level of torque may be extracted by the hydraulic system, damage on the electric generator due to excessive torque may be avoided. So, owing to the connection of the electric generator to the rotary shaft, a fraction or most of the torque applied to the shaft may be directly converted from mechanical to electrical energy. Further, even when the amount of mechanical energy is greater than the generator's capacity of energy conversion, the exceeding energy need not be dissipated.

An advantage of such power take-off systems is that it is not necessary to oversize the electric generator -which is expensive and can become too bulky- because any mechanical energy (due to the torque) in excess of that convertible by the electric generator into electrical energy, is stored in the hydraulic system in the form of hydraulic energy for later use. As such, as the electric generator can be made smaller, the power electronics and the transformers may be made smaller as well and, thus, work more efficiently, since they will work closer to its rated power.

Further, the control means of the power take-off system may also instruct the variable-displacement pump to extract torque from the rotary shaft and convert it into hydraulic energy. The amount of torque extracted may correspond to a predefined level of torque, or less than this level, for instance when the incoming renewable energy is not sufficient to apply a torque to the rotary shaft that is equal or greater than the predefined level of torque.

In some embodiments of the invention, the control means is configured to instruct the electric generator and the variable-displacement hydraulic pump to convert mechanical energy from the rotary shaft into electrical and hydraulic energy, respectively.

When the electric generator is converting mechanical energy into electrical energy, and the torque on the rotary shaft exceeds a predefined level of torque, the control means may instruct the variable-displacement pump to convert the torque in excess into hydraulic energy; in this situation, the electric generator may work efficiently and the surplus of energy is stored for later use.

Moreover, when the variable-displacement pump is converting mechanical energy into hydraulic energy and the torque on the shaft exceeds a predefined level of torque, the control means may instruct the electric generator to convert the torque in excess into electrical energy. Such configuration may be adopted when the system gives priority to storing hydraulic energy, for instance when the energy in the accumulators is below a certain threshold.

This is also possible due to the connection in parallel of the electric generator and the variable-displacement pump to the rotary shaft, that is, there is a fixed ratio between the rotational speed of the electric generator and the rotational speed of the variable-displacement pump.

In some embodiments of the invention, the control means is configured to instruct the electric generator to convert mechanical energy from the rotary shaft into electrical energy, and the variable-displacement hydraulic pump to introduce mechanical energy to the rotary shaft.

The control means may instruct the hydraulic system to energize the rotary shaft when, for example, the torque on the rotary shaft is less than a predefined level of torque. The variable-displacement hydraulic pump may work as a motor and convert hydraulic energy into mechanical energy for increasing the torque of the rotary shaft. This is achieved by adjusting the amount of pressurized hydraulic fluid that is released. The electric generator may convert the part of the torque added by the hydraulic system into electrical energy and, hence, the power take-off system may output more power in a stable manner when the level of incoming energy is lower.

In some embodiments of the invention, the control means is configured to instruct the variable-displacement hydraulic pump to convert mechanical energy from the rotary shaft into hydraulic energy, and the electric generator to introduce mechanical energy to the rotary shaft.

When the variable-displacement pump is converting mechanical into hydraulic energy, and the torque on the shaft is less than said predefined level of torque, the control means may instruct the electric generator to supply mechanical energy to the rotary shaft by converting electrical energy from the electrical grid into mechanical energy. This may occur, for example, when the hydraulic energy stored in the accumulators of the hydraulic system is below a certain threshold. Therefore, in these situations, increasing the level of hydraulic energy in the accumulators may have more priority than the conversion of mechanical energy into electrical energy. This, in turn, positively reverts in the power take-off system as, afterwards, it may provide electrical energy without many fluctuations during long periods of time.

In this sense, the electric generator comprises a drive which may modify the amount of torque the generator absorbs and/or supplies. The control means may act on the drive so as to adjust the way in which the generator operates, that is, whether it extracts torque from the rotary shaft, or it introduces torque to the rotary shaft. In either case, it may adjust the amount of torque extracted or introduced.

The control means adjusts the displacement of the hydraulic pump, consequently modifying the level of torque absorbed or supplied. Thus, adjusting the displacement, the pump may work in: pump mode, for example when the torque on the rotary shaft exceeds the predefined level of torque inputted in the control means, converting part of the mechanical energy into hydraulic energy, or when the amount of hydraulic energy stored in the accumulators is below a certain threshold; and motor mode, for example when the torque on the rotary shaft is less than the predefined level of torque set in the control means, in which case the control means may instruct the hydraulic pump to energize the rotary shaft with the stored hydraulic energy. The mode of operation is switched by adjusting the displacement of the hydraulic pump. In some embodiments, the control means is further configured to smoothen the fluctuations in the torque intensity in accordance with an algorithm or set of algorithms that try to keep the rotational speed of the shaft within a predefined interval.

Preferably, the control means switches between the pump and motor modes of operation when the displacement of the hydraulic pump is zero or close to zero so as to smoothly transition between the two modes of operation. Said modes may be switched, for example, by means of an electronically-controlled valve that swaps the low-pressure and high-pressure inlets. In some preferred embodiments, the valve is a crossover valve controlled by the control means of the hydraulic system.

In some embodiments of the invention, the control means is further configured to control an amount of mechanical energy supplied by the hydraulic system to the rotary shaft so as to maintain the torque intensity on the shaft within a predefined interval. By adjusting the amount of pressurized hydraulic fluid that is released, the mechanical energy supplied to the rotary shaft makes the torque not vary in excess.

The use of a hydraulic system connected to the rotary shaft makes the power take-off system less prone to dissipate part of the incoming energy and improve an overall efficiency. Moreover, owing to a more stable torque on the rotary shaft, the mechanical to electrical energy conversion may be more efficient than in a power take-off system without a hydraulic system as disclosed in the present invention.

Furthermore, the hydraulic system permits dimensioning the electric generator according to the average incoming energy instead of the expected peaks of energy, namely the size of the electric generator may be smaller as the excess of energy may be stored in the hydraulic system. This, in turn, makes the electric generator work in an efficient work conditions and achieve a higher efficiency than an electric generator whose dimensions are set so as to support all the incoming energy.

In some embodiments of the invention, both the electric generator and the variable-displacement hydraulic pump are mechanically coupled to the rotary shaft.

With this arrangement, the relation between the rotational speeds of the electric generator and the variable-displacement hydraulic pump are 1 to 1.

In some of these embodiments, speed multipliers are further installed in the shaft, either between the position of the electric generator and the position of the variable-displacement pump, or between the position the electric generator and an end of the shaft in which a prime mover may be connected. In some cases, speed multipliers are installed in both places.

In some embodiments, the power take-off system further comprises a first additional shaft, and a first gear mechanically coupled to both the first additional shaft and the rotary shaft; and the variable-displacement hydraulic pump is mechanically coupled to the first additional shaft. In some of these embodiments, the power take-off system further comprises a second additional shaft, and a second gear mechanically coupled to both the second additional shaft and the rotary shaft; and the electric generator is mechanically coupled to the second additional shaft.

By means of the gears and additional shafts, the variable-displacement pump and the electric generator may only support the parts of the torque that they cope with, respectively. Depending on the gears used, different relations other than 1 to 1 may be established between the rotational speed of each of the electric generator and the variable-displacement pump.

Another aspect of the present invention refers to a wave energy converter comprising a prime mover for converting wave energy into mechanical energy; and a power take-off system according to the first aspect of the present invention; wherein the mechanical energy is supplied to the power take-off system in the form of a torque applied to the rotary shaft of the power take-off system.

Another aspect of the present invention refers to a method for operating a power take-off system for converting mechanical energy into electrical energy, the power take-off system comprising a rotary shaft, an electric generator, and a hydraulic system including a variable-displacement hydraulic pump, the method comprising:
- connecting each of the electric generator and the variable-displacement hydraulic pump to the rotary shaft which is in turn connected to a prime mover, the variable-displacement hydraulic pump being connected in parallel with the electric generator; and
- one of:
   - energizing the rotary shaft by the prime mover and converting, the electric generator and the variable-displacement hydraulic pump, mechanical energy from the rotary shaft into electrical and hydraulic energy, respectively; and
   - converting, one of the electric generator and the variable-displacement hydraulic pump, mechanical energy from the rotary shaft into electrical or hydraulic energy, respectively, and introducing, the other one of the electric generator and the variable-displacement hydraulic pump, mechanical energy to the rotary shaft.

By connecting the electric generator and the variable-displacement hydraulic pump to the rotary shaft in parallel, less number of energy conversions may be necessary in the power take-off system to transform mechanical energy in the rotary shaft to electrical energy. The hydraulic system, by means of the variable-displacement hydraulic pump, may convert mechanical energy in the rotary shaft to hydraulic energy which may be stored in said hydraulic system for later use.

In some cases, by introducing, one of the electric generator and the variable-displacement hydraulic pump, mechanical energy to the rotary shaft in the form of torque, it is possible to convert a larger amount of mechanical energy into electrical or hydraulic energy by the other one of the generator and the hydraulic pump. This way, the power take-off system may increase its production of electric power or the amount of energy stored in the hydraulic system.

In some embodiments, the method further comprises converting mechanical energy from the rotary shaft into electrical and hydraulic energy by the electric generator and the variable-displacement hydraulic pump, respectively.

Owing to the conversion of mechanical energy, from the shaft, by both of the electrical generator and the hydraulic pump, reduction of energy conversion losses may be achieved, which may lead to an enhanced overall efficiency of the power take-off system.

In some embodiments, the method further comprises converting, the variable-displacement hydraulic pump, mechanical energy from the rotary shaft into hydraulic energy, and introducing, the electric generator, mechanical energy to the rotary shaft.

In some embodiments, the method further comprises converting, the electric generator, mechanical energy from the rotary shaft into electrical energy, and introducing, the variable-displacement hydraulic pump, mechanical energy to the rotary shaft.

In some embodiments, the method further comprises energizing the rotary shaft when the torque on the rotary shaft is less than the predefined level of torque. The accumulated hydraulic energy may be used, partially or completely, for energizing the rotary shaft so as to increase the intensity of the applied torque, that is, increasing the mechanical energy in the rotary shaft. Since the torque on the shaft was less than the predefined level -for example, due to a reduced level of energy of the renewable energy source,- the generator may convert the additional mechanical energy into electrical energy. Consequently, the extracted electric power does not fully depend on the instantaneous incoming energy, e.g. wave energy, wind energy, etc.

In some embodiments, the method further comprises controlling, with control means, an amount of mechanical energy supplied by the hydraulic system to the rotary shaft. By adjusting the displacement of the hydraulic pump when it is functioning as a motor, the amount of pressure on the hydraulic fluid released may be regulated and the mechanical energy supplied to the rotary shaft makes the torque not vary in excess, thus, stabilizing the output power of the power take-off system.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is a block diagram of a power take-off system of the prior art.
Figure 2 is a block diagram of a power take-off system including a hydraulic system in accordance with an embodiment of the present invention.
Figure 3 is a block diagram of a power take-off system including a hydraulic system in accordance with another embodiment of the present invention.
Figure 4 is a block diagram of a power take-off system including a hydraulic system in accordance with another embodiment of the present invention.
Figure 5 is an example of a wave energy converter comprising the power take-off system of Figure 2.

### DESCRIPTION OF A WAY OF CARRYING OUT THE INVENTION

The following description is not to be taken in a limiting sense but is given solely for the purpose of describing the broad principles of the invention. Embodiments of the invention will be now described by way of example, with reference to the above-mentioned drawings showing elements and results according to the invention.

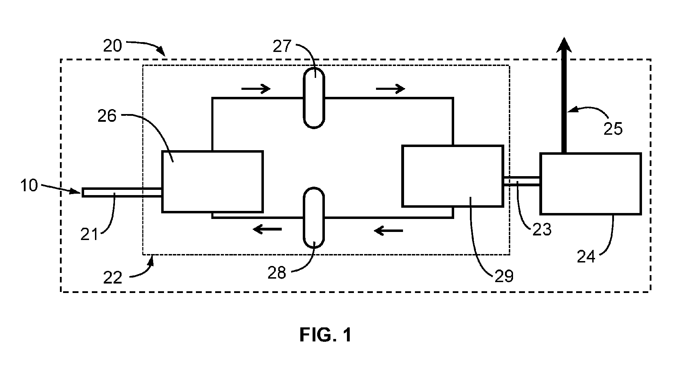

Figure 1 shows a power take-off system 20 of the prior art represented as a block diagram. The power take-off system 20 includes first and second rotary shafts 21, 23, an hydraulic system 22, and an electric generator 24. The hydraulic system 22 comprises a hydraulic pump 26 mechanically coupled to the shaft 21, a high pressure accumulator 27, a low pressure accumulator 28 and a hydraulic motor 29 mechanically coupled to the shaft 23, whereas the electric generator 24 is mechanically coupled to the second rotary shaft 23. So the primary mover (and consequently the hydraulic pump) and the electric generator 24 are not arranged in parallel: there is no fixed relation between the rotational speed of the electric generator 24 and the rotational speed of the hydraulic pump 22.

An energy converter may comprise the power take-off system 20, and connect a prime mover to the first shaft 21 at an end indicated with arrow 10. The prime mover applies a torque to the first shaft 21 when the energy converter captures incoming energy, such as energy from a renewable source. The first shaft 21 drives the hydraulic pump 26, which converts the mechanical energy resulting from the torque into hydraulic energy that is stored within the hydraulic system 22 by means of fluid in the high and low pressure accumulators 27, 28. Then, the hydraulic motor 29 may introduce energy in the form of a torque - converting the hydraulic energy into mechanical energy- on the second rotary shaft 23, depending on the amount of hydraulic energy that it has stored. The electric generator 24 may then convert this mechanical energy -which has already been converted two times- into electrical energy, and output it at port 25.

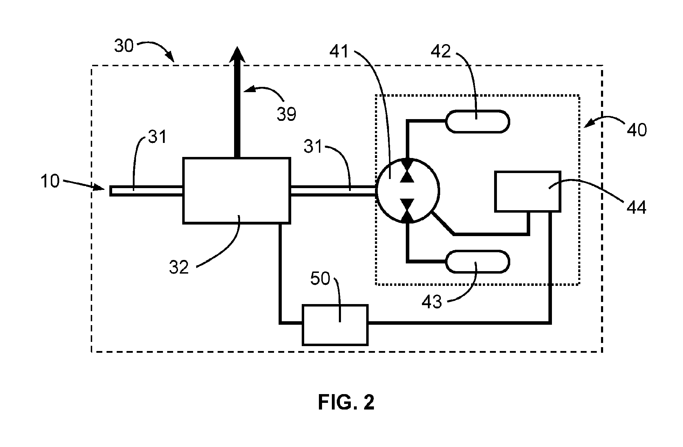

Figure 2 shows a power take-off system 30 in accordance with an embodiment of the present invention, represented in a block diagram fashion. Particularly, the power take-off system 30 comprises a rotary shaft 31, an electric generator 32 with an output 39 for the electric power transformed, and a hydraulic system 40. Both the electric generator 32 and a variable-displacement hydraulic pump 41 of the hydraulic system 40 are connected to the rotary shaft 31 in parallel, that is, there is a fixed ratio between the rotational speed of the electric generator 32 and the rotational speed of the variable-displacement pump 41. The generator 32 includes a drive (not illustrated) with which an amount of torque that the electric generator 32 absorbs and/or supplies may be adjusted. The shaft 31, which is a through-shaft, and is mechanically coupled to the electric generator 32; the variable-displacement pump 41 is also mechanically coupled to the shaft and is located at a first end of the shaft. A second end of the shaft 31 is connectable to a device or prime mover (in the position indicated with arrow 10) that transforms energy from a renewable energy source into a torque that is applied to the shaft 31. Therefore, when the power take-off system 30 is used in a wave energy converter, for example, a prime mover transforms wave power into mechanical energy, by means of a torque applied to the rotary shaft 31.

In addition to the variable-displacement hydraulic pump 41, the hydraulic system 40 comprises a high pressure accumulator 42, a low pressure accumulator 43, and control unit 44 configured to adjust the displacement of the variable-displacement hydraulic pump 41, and monitor the operation of the hydraulic system 40.

The control means 50 monitors the torque and the rotational speed on the shaft 31, and the pressure in the accumulators 42, 43. In accordance with these parameters, the control means 50 may instruct the electric generator 32 to convert mechanical energy resulting from the torque applied to the rotary shaft into electrical energy. It may also instruct the variable-displacement hydraulic pump 41 to convert any torque in excess of the predefined level of torque inputted in the control means 50 into hydraulic energy. The control means 50 may even instruct the variable-displacement hydraulic pump 41 to supply additional torque to the rotary shaft 31 by converting stored hydraulic energy into mechanical energy, for instance when the amount of torque on the shaft is less than the predefined level of torque. With this configuration, the power take-off system may feature an improved efficiency owing to the direct conversion of the generator 32 into electrical energy.

Alternatively, the control means 50 may instruct the variable-displacement pump 41 to convert mechanical energy -due to the torque- into hydraulic energy, and instruct the electric generator 32 to convert any torque in excess of the predefined level of torque inputted in the control means 50 into electrical energy. The control means 50 may even instruct the electric generator 32 to supply additional torque to the rotary shaft 31 by converting electrical energy from the electrical grid into mechanical energy, for instance when the amount of torque on the shaft is less than the predefined level of torque. With this configuration, the power take-off system may reduce its efficiency by storing hydraulic energy in the first place. In exchange, the power take-off system may provide a stable electrical energy during long periods of time while the generator 32 converts torque into electrical energy because when the level of incoming energy is low, the hydraulic system 40 may provide additional torque to the shaft 31 by adjusting the amount of pressure on the hydraulic fluid that is released.

The control means 50 monitors the power take-off system and switches between the pump and motor modes of the variable-displacement hydraulic pump 41, and also adjusts the mode of operation of the generator 32. In some of these embodiments, the control means 50 is provided with an algorithm or set of algorithms configured to smoothen the amount of torque in the rotary shaft 31 so that the power produced by the power take-off system 30 is substantially stable or to make the shaft maintain a rotational speed within a predefined interval.

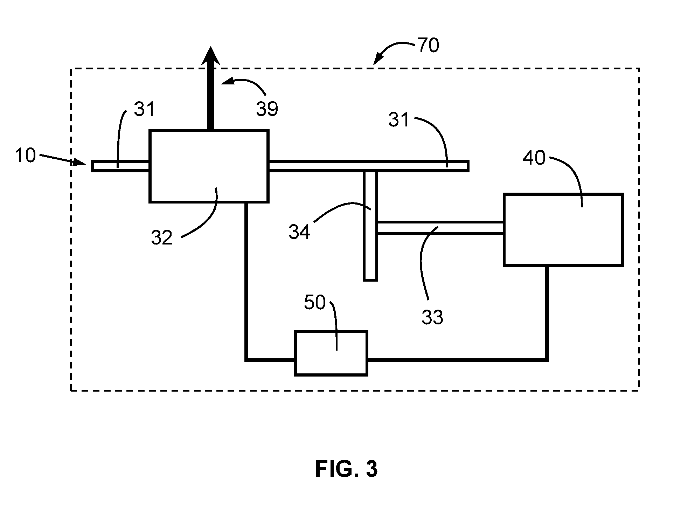

A power take-off system 70 in accordance with another embodiment of the present invention is shown in Figure 3. The electric generator 32 and the hydraulic system 40 are connected in parallel: the electric generator is mechanically coupled to the rotary shaft 31, and the variable-displacement hydraulic pump (41), (included in the hydraulic system 40 albeit not illustrated in Figure 3), is mechanically coupled to a first additional shaft 33. Further, a first gear 34 mechanically coupled to said first additional shaft 33 is in direct physical contact with rotary shaft 31, hence the hydraulic system 40 is connected to the rotary shaft 31. With this arrangement, the torque may be extracted from or supplied to the rotary shaft 31 by the hydraulic system 40.

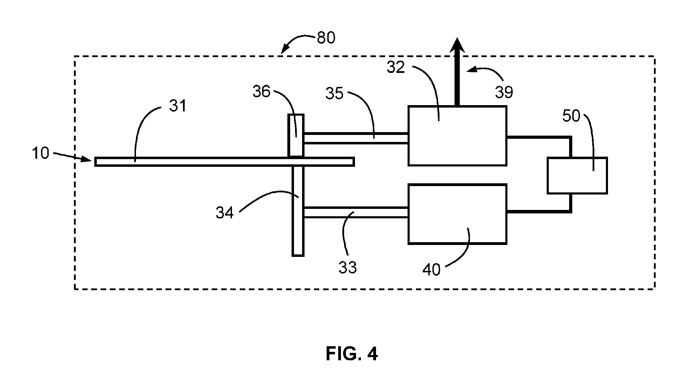

Figure 4 shows a power take-off system 80 in accordance with another embodiment of the present invention. The electric generator 32 and the hydraulic system 40 are connected, in parallel, to the rotary shaft 31. Particularly, the hydraulic system 40 is connected to the first additional shaft 33, the generator 32 is connected to the second additional shaft 35, and both additional shafts 33, 35 are in physical contact with rotary shaft 31 by means of first and second gears 34, 36, respectively.

With the arrangements shown in Figures 3 and 4, the variable-displacement pump of the hydraulic system 40 may only support the part of the torque that it copes with. Similarly, in Figure 4, the electric generator 32 only supports its corresponding part of the torque as well. Depending on the characteristics of the gears 34, 36 used, different multiplication ratios may be established in the power take-off systems, so a ratio between the rotation of the electric generator and the variable-displacement pump different to 1 to 1 may be achieved. However, as first and second gears 34, 36 and first and second additional shafts 33, 35 feature some losses -due to friction mainly,- the efficiency of power take-off systems 70, 80 may be lower.

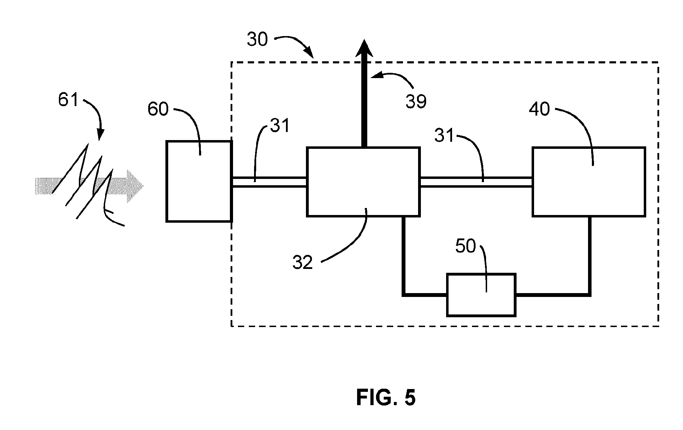

The wave energy converter shown in Figure 5 comprises the power take-off system 30 shown in Figure 2. Other wave energy converters or converters of another renewable energy sources may comprise any of power take-off systems 30, 70, 80. The hydraulic system 40 is mechanically coupled to the rotary through-shaft 31 at a first end of the shaft, and the electric generator 32 is also mechanically coupled to the rotary shaft 31. The electric generator 32 is not necessarily at one of the two ends of the shaft since the shaft goes through the generator 32. A prime mover 60 is connected to the rotary through-shaft 31 by being mechanically coupled to said shaft at a second end, and converts energy from incoming waves 61 into mechanical energy, which is applied to the rotary shaft 31 in the form of a torque.

The prime mover 60 may be, for example, one of the following: an oscillating wave surge converter flap, an oscillating water column air-turbine, a bulge wave energy converter hydro-turbine, a rotating mass, a pinion-and-rack of a single-body and two-body point absorbers, etc.

The generator 32 converts mechanical energy from the rotary shaft 31 into electrical energy, which is outputted in the form of electric power at port 39.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A power take-off system (30,70,80) for mechanical to electrical energy conversion, the power take-off system comprising a rotary shaft (31) connectable to a prime mover (60), the power take-off system (30,70,80) comprising:
an electric generator (32) connected to the rotary shaft (31); and
a hydraulic system (40) comprising a variable-displacement hydraulic pump (41);
**characterized in that**:
the variable-displacement hydraulic pump (41) is connected to the rotary shaft (31) in parallel with the electric generator (32); and
**in that** the power take-off system further comprises:
control means (50) configured to instruct the electric generator (32) and the variable-displacement hydraulic pump (41) to convert mechanical energy from the rotary shaft (31) into electrical and hydraulic energy, respectively, upon energization of the rotary shaft (31) by the prime mover (60), or to instruct one of the electric generator (32) and the variable-displacement hydraulic pump (41) to convert mechanical energy from the rotary shaft (31) into electrical or hydraulic energy, respectively, and the other one of the electric generator (32) and the variable-displacement hydraulic pump (41) to introduce mechanical energy to the rotary shaft (31).

2. The power take-off system (30,70,80) according to claim 1, wherein the control means (50) is configured to instruct the electric generator (32) and the variable-displacement hydraulic pump (41) to convert mechanical energy from the rotary shaft (31) into electrical and hydraulic energy, respectively.

3. The power take-off system (30,70,80) according to claim 1, wherein the control means (50) is configured to instruct the electric generator (32) to convert mechanical energy from the rotary shaft (31) into electrical energy, and the variable-displacement hydraulic pump (41) to introduce mechanical energy to the rotary shaft (31).

4. The power take-off system (30,70,80) according to claim 1, wherein the control means (50) is configured to instruct the variable-displacement hydraulic pump (41) to convert mechanical energy from the rotary shaft (31) into hydraulic energy, and the electric generator (32) to introduce mechanical energy to the rotary shaft (31).

5. The power take-off system (30,70,80) according to any of the preceding claims, wherein both the electric generator (32) and the variable-displacement hydraulic pump (41) are mechanically coupled to the rotary shaft (31).

6. The power take-off system (30,70,80) according to any of claims 1-4, wherein:
the power take-off system further comprises a first additional shaft (33), and a first gear (34) mechanically coupled to the first additional shaft (33) and in contact with the rotary shaft (31); and
the variable-displacement hydraulic pump (41) is mechanically coupled to the first additional shaft (33).

7. The power take-off system (30,70,80) according to claim 6, wherein:
the power take-off system (30,70,80) further comprises a second additional shaft (35), and a second gear (36) mechanically coupled to the second additional shaft (35) and in contact with the rotary shaft (31); and
the electric generator (31) is mechanically coupled to the second additional shaft (35).

8. A wave energy converter comprising:
a prime mover (60) for converting wave energy into mechanical energy; and
the power take-off system (30,70,80) according to any of claims 1-7;
wherein the mechanical energy is supplied to the power take-off system in the form of a torque applied to the rotary shaft (31) of the power take-off system (30,70,80).

9. A method of operating a power take-off system (30,70,80) for converting mechanical energy into electrical energy, the power take-off system (30,70,80) comprising a rotary shaft (31), an electric generator (32), and a hydraulic system (40) including a variable-displacement hydraulic pump (41), the method comprising:
connecting each of the electric generator (32) and the variable-displacement hydraulic pump (41) to the rotary shaft (31) which is in turn connected to a prime mover (60), the variable-displacement hydraulic pump (41) being connected in parallel with the electric generator (32); and
one of:
energizing the rotary shaft by the prime mover (60) and converting mechanical energy from the rotary shaft (31) into electrical and hydraulic energy by the electric generator (32) and the variable-displacement hydraulic pump (41), respectively; and
converting, one of the electric generator (32) and the variable-displacement hydraulic pump (41), mechanical energy from the rotary shaft (31) into electrical or hydraulic energy, respectively, and introducing, the other one of the electric generator (32) and the variable-displacement hydraulic pump (41), mechanical energy to the rotary shaft (31).

10. The method according to claim 9, the method comprising: converting, the electric generator (32) and the variable-displacement hydraulic pump (41), mechanical energy from the rotary shaft (31) into electrical and hydraulic energy, respectively.

11. The method according to claim 9, the method comprising: converting, the variable-displacement hydraulic pump (41), mechanical energy from the rotary shaft (31) into hydraulic energy, and introducing, the electric generator (32), mechanical energy to the rotary shaft (31).

12. The method according to claim 9, the method comprising: converting, the electric generator (32), mechanical energy from the rotary shaft (31) into electrical energy, and introducing, the variable-displacement hydraulic pump (41), mechanical energy to the rotary shaft (31).
